# EUROPÄISCHE PATENTSCHRIFT

(11) **EP 0 746 497 B1**
(45) Veröffentlichungstag und Bekanntmachung des Hinweises auf die Patenterteilung: **02.07.1997**
(21) Anmeldenummer: 95909774.2
(22) Anmeldetag: 23.02.1995
(51) Int. Cl.: B64F 1/00, G01S 17/42, G01S 17/88

(54) **VORRICHTUNG ZUR FÜHRUNG DES PILOTEN EINES SICH SEINER PARKPOSITION NÄHERNDEN FLUGZEUGES**
DEVICE FOR GUIDING THE PILOT OF AN AIRCRAFT APPROACHING ITS PARKING POSITION
DISPOSITIF DE GUIDAGE DU PILOTE D'UN AVION QUI S'APPROCHE DE SA POSITION DE STATIONNEMENT

(30) Priorität: 02.03.1994 DE 4406821
(43) Veröffentlichungstag der Anmeldung: 11.12.1996
(73) Patentinhaber: Hipp, Johann, 22179 Hamburg (DE)
(72) Erfinder: TABEL, Ernst, Otto, D-22327 Hamburg (DE)
(74) Vertreter: Emmel, Thomas, Dipl.-Biol., Dr.
(86) Internationale Anmeldenummer: EP9500661
(87) Internationale Veröffentlichungsnummer: WO9523734

(56) Entgegenhaltungen:
- EP-A- 0 368 692
- US-A- 4 158 885
- PATENT ABSTRACTS OF JAPAN Bd. 14, Nr. 517 (M-1047) 13 November 1990 & JP,A,02 216 390 (TOSHIBA TESUKO KK) 29 August 1990
- PATENT ABSTRACTS OF JAPAN Bd. 16, Nr. 313 (P-1383) 09 Juli 1992 & JP,A,04 089 519 (TOKIMEC INC) 23 M rz 1992

## Beschreibung

Die Erfindung bezieht sich auf eine Vorrichtung nach dem Oberbegriff des Anspruchs 1.

Ein gelandetes Flugzeug wird in den meisten Fällen zunächst von einem vorausfahrenden Fahrzeug in den Rollfeldbereich geleitet, in dem seine Parkposition liegt. Auf dem Rollfeld sind sogenannte Center-Lines aufgemalt, denen das Flugzeug folgen muß. Die Center-Lines enden in geraden Stand-Center-Lines, die zu der Parkposition führen.

Bei entsprechend ausgerüsteten Flughäfen docken die Flugzeuge in Parkposition mit mindestens einem ihrer Ausgänge an z.B. eine Gangway-Brücke an. Da derartige Gangway-Brücken nur in Grenzen bewegbar sind, ist es erforderlich, daß die für jeden Flugzeugtyp unterschiedlich festgelegte Parkposition exakt eingenommen wird. Dazu muß der Pilot das auf der Stand-Linie geführte Flugzeug an einem definierten Punkt zum Stillstand bringen.

Problematisch hieran ist, daß sich der Pilot zumindest bei gängigen Flugzeugtypen 4-6 m über dem Erdboden befindet und keinen direkten Sichtkontakt nach unten hat.

Es existieren eine Reihe von gängigen Hilfsvorrichtungen (z. B. Moiree-Anzeige), die es dem Piloten ermöglichen, sein Flugzeug ohne direkten Blickkontakt auf der Stand-Linie zu führen.

Anders verhält es sich bei Systemen, die dem Piloten eine Auskunft über die verbleibende Rolldistanz bis zur Parkposition geben können. In diesem Zusammenhang ist bislang keine optimale Vorrichtung bekannt geworden.

Es ist zwar z.B. bekannt, im Boden des Rollfeldes Induktionsschleifen zu verlegen, die, sobald z.B. das Flugzeugvorderrad darüber hinwegrollt, ein Signal erzeugen, das in eine entsprechende Entfernungsanzeige umgesetzt werden kann. Nachteilig ist, daß die Induktionsschleifen infolge der großen Belastung durch die darüber hinwegrollenden Flugzeuge oder auch witterungsbedingt z.B. durch Blitzeinschläge leicht Schaden nehmen können und häufig ausgewechselt werden müssen und weiterhin auch nicht genau arbeiten.

Das Dokument EP-A-0 368 692 zeigt eine Vorrichtung gemäß dem Oberbegriff des Anspruchs 1.

Aus der WO 90/13104 ist weiterhin ein System bekannt geworden, bei dem ein sich seiner Parkposition näherndes Flugzeug mittels Radar vermessen wird. Dies geschieht in der Regel mit einem Radarstrahl auf Mikrowellenbasis, der auf die Flugzeugspitze gerichtet ist. Über eine Anzeigetafel kann der Pilot seine aktuelle Position bzw. die verbleibende Distanz zur Parkposition erfahren. Nachteilig ist, daß der Radarstrahl bei Annäherung des Flugzeuges nachgeführt werden muß, was entweder eine optische oder sonstige Steuerung erfordert.

Aufgabe der Erfindung ist es demgegenüber, eine Vorrichtung zu schaffen, mit der sich nahezu alle Flugzeugtypen sicher und mit geringem Datenverarbeitungsaufwand in die gewünschte Parkposition führen lassen und bei deren Benutzung keine gesundheitliche Beeinträchtigung der Cockpitcrew auftreten kann.

Gelöst wird diese Aufgabe mit einer Vorrichtung, die die Merkmale des Anspruches 1 aufweist.

Danach weist die Vorrichtung mindestens einen von vorne auf das sich nähernde Flugzeug gerichteten 2D-Lasersensor auf. Der erfindungsgemäß eingesetzte Sensor sendet mit vorgegebener Frequenz über einen ebenfalls vorgegebenen Blickwinkel Laserpulse aus, die z.B. von der Flugzeugoberfläche zurück in einen z.B. im Sensorbereich angeordneten Empfänger geworfen werden. Über die Pulslaufzeit läßt sich die Entfernung des Meßpunktes zu dem Sensor berechnen. Berücksichtigt man weiterhin den Winkel des gesendeten Laserpulses, so kann man die Polarkoordinaten des jeweiligen Meßpunktes errechnen.

Mittels eines derartigen Sensors wird nun die sich nähernde Flugzeugfront in aufeinanderfolgenden Meßläufen kontinuierlich in einer Ebene vermessen. Der Lasersensor sollte dabei so ausgerichtet sein, daß die Meßebene durch die Längsachse des Flugzeuges verläuft. Ansonsten kann die Meßebene nahezu beliebige Winkel einnehmen. Im Hinblick auf die weiter unten beschriebene Verarbeitung der Meßergebnisse darf die Meßebene allerdings nicht waagerecht ausgerichtet sein.

Wie oben beschrieben, liefert der Lasersensor in jedem Meßdurchlauf für die von ihm auf der Flugzeugfront vermessenen Punkte die zugehörigen Polarkoordinaten. Erfindungsgemäß ist nun vorgesehen, daß diese Polarkoordinaten in eine Vertikal- und eine Horizontalkoordinate umgerechnet werden. Nach der Umrechnung werden die Meßpunkte ermittelt, die in einen vorher festgelegten Höhenbereich zwischen einer oberen und einer unteren Vertikalkoordinate fallen. Die für diesen definierten Höhenbereich ermittelten Meßpunkte werden bezüglich ihrer Horizontalkoordinaten gemittelt und der Mittelwert als aktuelle Positon des Flugzeuges zugrundegelegt.

Die zu erreichende Parkposition des Flugzeuges ist ebenfalls als für jeden Flugzeugtyp spezifische Horizontalkoordinate definiert. Die Annäherung des oben beschriebenen Mittelwertes an die Horizontalkoordinate der Parkposition kann auf geeignete Weise optisch oder akustisch angezeigt werden.

Wesentliches Merkmal der Erfindung ist, daß die zur Feststellung der aktuellen Position herangezogenen Daten lediglich aus den Meßergebnissen über z.B. einen relativ kleinen Höhenbereich der Flugzeugfront stammen. Dieser Höhenbereich wird für jeden Flugzeugtyp gesondert festgelegt und im Sensor bzw. dem Sensorrechner gespeichert. Praktisch sieht dies so aus, daß der Sensorrechner bei Annäherung z.B. eines Airbus A 300 aus seinem Datenbestand den für diesen Flugzeugtyp gespeicherten Höhenbereich aufruft und bei der Verarbeitung der Meßergebnisse zugrundelegt.

Es hat sich herausgestellt, daß sich für jeden der bislang untersuchten Flugzeugtypen mindestens ein Höhenbereich festlegen läßt, in dem eine störungsfreie Laserabtastung möglich ist.

Der Betrieb der erfindungsgemäßen Vorrichtung setzt allerdings voraus, daß der Sensor den sich nähernden Flugzeugtyp erkennen kann bzw dem Sensorrechner der sich nähernde Flugzeugtyp bekannt ist, um den für diesen Flugzeugtyp vorgegebenen Höhenbereich und die ebenfalls für diesen Flugzeugtyp spezifische Horizontalkoordinate der Parkposition aufrufen zu können. In herkömmlichen Flughäfen ist davon auszugehen, daß Vorrichtungen, wie z.B. die erfindungsgemäße, mit dem Zentralrechner des Flughafens verbunden sind. Der Zentralrechner weiß schon vor Landung eines Flugzeuges, um welchen Typ Flugzeug es sich handelt und an welchem Gate angedockt werden soll. Die Weiterleitung dieser Information an z.B. den Sensorrechner des betreffenden Gates stellt keinerlei Probleme dar. Natürlich kann die Ansteuerung des Sensors auch dezentral von z.B. dem Gatepersonal vorgenommen werden. Weiterhin ist es auch möglich, daß der Sensor selbständig den sich nähernden Flugzeugtyp erkennt. Hierauf wird weiter unten eingegangen.

Die erfindungsgemäße Vorrichtung besitzt eine ganze Reihe von Vorteilen. Hauptvorteil ist, daß man mit einem Sensor ohne größere Anpassung nahezu alle unterschiedlichen bekannten Flugzeugtypen vermessen kann. Der erfindungsgemäße Lasersensor kann z.B. einen Blickwinkel von ca. 60° überstreichen. Ist er in ausreichender Entfernung zu der Parkposition und mit entsprechend ausgerichteter Meßebene angeordnet, so kann mit z.B. einem 60° Blickwinkel sowohl eine sich nähernde Sportmaschine als auch z.B. ein Jumbo-Jet erfaßt werden, ohne daß dazu eine Höhenverstellung des Sensors etc. erforderlich wäre. Ein weiterer Vorteil ist, daß die Beschränkung der Auswertung auf Signale, die von Meßpunkten aus mindestens einem (für jeden Flugzeugtyp unterschiedlichen) begrenzten Höhenbereich stammen, einen geringen Datenverarbeitungsaufwand erfordert. Zusätzlich hat sich herausgestellt, daß die erfindungsgemäße Auswertung zu äußerst zuverlässigen Ergebnissen führt. Bei Berücksichtigung der gesamten Flugzeugfront müßte man nämlich auch schlecht reflektierenden Problembereiche, wie z.B. das Cockpitfenster oder die Flugzeugspitze vermessen und auswerten, was möglicherweise zu einer Verfälschung des Ergebnisses führt. Dieser Nachteil wird erfindungsgemäß umgangen, indem man nur die Meßsignale auswertet, die von Meßpunkten aus vorher ausgewählten, gut reflektierenden Bereichen der Flugzeugfront stammen. Auf jeder Flugzeugfront gibt es eine Vielzahl solcher Bereiche zwischen Spitze und Cockpitfenster.

Für jeden der bislang untersuchten Flugzeugtypen lassen sich ein oder vorzugsweise gemäß Anspruch 2 mehrere Höhenbereiche festlegen, in dem bzw in denen eine störungsfreie Laserabtastung möglich ist. Stehen für jeden Meßdurchlauf mehrere Höhenbereiche zur Auswertung zur Verfügung, so vergrößert sich die Meßsicherheit. Es kann in diesem Zusammenhang vorgesehen sein, daß von den mehreren vorgegebenen Höhenbereichen nur die in die Auswertung einbezogen werden, die gut reflektierend sind und Meßsignale mit ausreichender Stärke liefern. Es ist nämlich davon auszugehen, daß die Frontbereiche von Flugzeugen gleichen Types nicht zwangsläufig hinsichtlich ihrer Reflexionseigenschaften übereinstimmen. Hier kann es infolge unterschiedlicher fluglinienabhängiger Bemalungen oder auch infolge von Verschmutzungen zu gravierenden Abweichungen innerhalb eines Types kommen. Hat man dann für jeden Flugzeugtyp mehrere Höhenbereiche für die Auswertung zur Verfügung, so kann man individuell für jedes sich nähernde Flugzeug eines Types in Abhängigkeit von der Qualität des Meßsignales den oder die Höhenbereiche auswählen, die bei der Bestimmung der Istposition des Flugzeuges zugrundegelegt werden.

Voraussetzung für das Funktionieren der Erfindung ist, daß der Sensor bzw. der Sensorrechner für jeden Flugzeugtyp einen bzw. mehrere Höhenbereiche und die entsprechenden Parkpositionen gespeichert hat. Die Eingabe der Höhenbereiche bzw. der Parkpositionen in den Sensorspeicher bedeutet angesichts der großen Anzahl von unterschiedlichen Flugzeugtypen etc. einen relativ großen Arbeitsaufwand. Eine vorteilhafte Ausgestaltung sieht daher nach Anspruch 3 vor, daß die erfindungsgemäße Vorrichtung die für die jeweiligen Flugzeugtypen relevanten Daten (auszuwertende Höhenbereiche, Parkposition) selbständig erfaßt und abspeichert. Hierzu wird eine Maschine eines neuen (dem Sensor noch nicht "bekannten") Flugzeugtyps in Parkposition vor dem Sensor ausgerichtet. Der Sensor tastet dann in vorgegebenen Höhenbereichen die Flugzeugfront ab und wählt mindestens einen gut reflektierenden Höhenbereich aus. Dieser Höhenbereich wird für diesen Flugzeugtyp gespeichert und zukünftig für alle Maschinen dieses Types bei der Bestimmung der Istposition zugrundegelegt. Weiterhin wird der während des Einmessens für diesen Höhenbereich errechnete Mittelwert als Parkposition für den Flugzeugtyp gespeichert. Diese Ausgestaltung hat gleich mehrere Vorteile. Die Vorrichtung muß nicht aufwendig programmiert werden. Außerdem werden die Höhenbereiche, die eine optimale Abtastung erlauben, nicht theoretisch festgelegt, sondern in einer aktuellen Meßsituation ermittelt.

Weiterhin setzt die Erfindung voraus, daß der Sensor weiß, welcher Flugzeugtyp sich nähert. Wie oben ausgeführt, ist es in modernen Flughäfen kein Problem, eine derartige Information an den Sensor zu übermitteln. D.h. dem Sensor des betreffenden Gates kann z.B. über den Zentralrechner des Flughafens z.B. (oder auch von dem Gatepersonal per Handsteuerung) mitgeteilt werden, welcher Flugzeugtyp in Parkposition eingewiesen werden soll. Es kann aber weiterhin wünschenswert sein, daß, z.B. zur Absicherung bzw. Überprüfung der vom Flughafenrechner übermittelten Informationen, der Sensor selbst in der Lage ist, den sich nähernden Flugzeugtyp zu erkennen. Er kann dann einen Vergleich mit der vom Flughafenrechner übermittelten Information vornehmen und bei Abweichungen gegebenenfalls den Rollvorgang des Flugzeugs unterbrechen bzw. die Einweisung anhand seiner eigenen Daten übernehmen. Die in diesem Zusammenhang vorteilhaft genannte Ausgestaltung des Anspruches 4 sieht vor, daß der Sensor zunächst ein sich näherndes Flugzeug in mehreren Höhenbereichen vermißt. Das sich ergebende Profil wird mit für die jeweiligen Flugzeugtypen im Sensorspeicher abgelegten Profilen verglichen und der Flugzeugtyp ermittelt.

Wie zuvor ausgeführt, sollte die Meßebene des Lasersensors in der Längsachse des zu vermessenden Flugzeuges ausgerichtet sein und kann, davon abgesehen, mit ihrer anderen Hauptachse nahezu jeden beliebigen Winkel einnehmen. Aufgrund der gewählten Verarbeitung der Meßergebnisse - Auswahl nur der Meßpunkte, die in einen bestimmten Höhenbereich fallen - darf die Meßebene allerdings nicht waagerecht ausgerichtet sein (da man hier Meßwerte nur eines Höhenbereiches erhalten würde). Sinnvollerweise wird man die Meßebene des Lasersensors jedoch so wählen, daß sie gemäß Anspruch 2 im wesentlichen vertikal ausgerichtet ist. Durch senkrechte Ausrichtung der Meßebene verringert man die Fehlermöglichkeit und stellt andererseits sicher, daß der Lasersensor mit seinem Blickwinkel tatsächlich ohne größere Anpassung die unterschiedlichsten Flugzeugtypen erfassen kann. Bei einem Lasersensor, dessen Meßebene nur geringfügig abweichend von der Horizontalebene ausgerichtet ist, müßte dagegen vermutlich eine Höhenanpassung des Sensors an unterschiedliche Flugzeugtypen erfolgen, was relativ aufwendig ist.

Man könnte sich weiterhin z.B. vorstellen, den Sensor mobil, z.B. in ein Handgerät, zu integrieren, das von einem vor der Parkposition des Flugzeuges wartenden Einweiser bedient wird. Bei einem derartigen mobilen Sensor ist allerdings erforderlich, daß dem Sensor bzw. dem Rechner auch die Position, von der aus gemessen wird, bekannt ist. Außerdem dürfte es wohl erforderlich sein, daß ein derartiger mobiler Sensor immer auf einer definierten Höhe gehalten wird. Hier können daher eine Reihe von Fehlern auftreten. Außerdem ist es ohnehin erwünscht, den Personalaulwand auf den Flughäfen zu reduzieren.

Eine weitere vorteilhafte Ausgestaltung sieht daher vor, daß der Sensor an einem Bereich des Flughafengebäudes in Ausrichtung zu der Parkposition des Flugzeuges angeordnet ist. Dabei ist es erforderlich, daß der Sensor direkt von vorne auf die sich nähernde Flugzeugfront gerichtet ist. Bei der Festinstallation des Sensors muß man sich daher zunutze machen, daß sich Flugzeuge auf dem Rollfeld nicht frei, sondern entlang festgelegter Stand-Lines in ihre Parkpositionen bewegen. Bei der Installation des Sensors am Flughafengebäude ist daher lediglich darauf zu achten, daß er oberhalb der Stand-Linie bzw. deren gerader Verlängerung angeordnet ist.

Eine letzte vorteilhafte Ausgestaltung sieht gemäß Anspruch 7 vor, daß mehrere Lasersensoren vorgesehen sind, deren Meßebenen parallel nebeneinander angeordnet sind. Insbesondere bei vertikaler Ausrichtung der Meßebenen läßt sich mit einer derartig ausgestalteten Vorrichtung auch unproblematiosch eine eventuelle Seitenabweichung des Flugzeuges von der Center-Line erfassen und anzeigen.

Im folgenden soll die Erfindung anhand einer Abbildung näher erläutert werden.

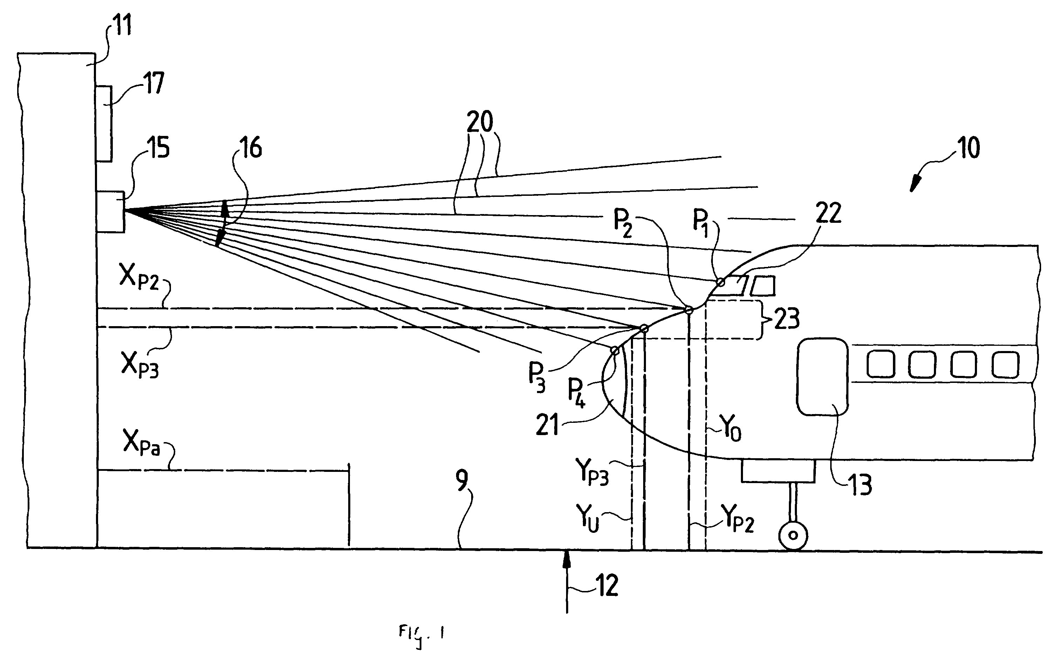

In der Abbildung ist auf einem Rollfeld 9 schematisch ein Flugzeug 10 dargestellt, das sich auf ein Flughafengebäude 11 zubewegt. Die für das Flugzeug 10 vorgesehene Parkposition ist mit einem Pfeil 12 gekennzeichnet. Der Pfeil 12 bezeichnet die Andockposition einer nicht gezeigten Gangwaybrücke an einer Tür 13 des Flugzeuges 10. In Parkposition muß das Flugzeug 10 sich also mit seiner Kabinentür 13 an der durch den Pfeil 12 gekennzeichneten Stelle oberhalb des Rollfeldes 9 befinden. Zur Unterstützung des Piloten bei der Führung des Flugzeuges 10 in seine Parkposition ist ein Sensor 15 vorgesehen, der mit einem in einem Blickbereich 16 verschwenkbaren Laserstrahl 20 die Front des Flugzeuges 10 abtastetet, unter anderem in den beispielhaft dargestellten Meßpunkten P1 bis P4. Die Funktionsweise des Lasersensors wurde bereits weiter oben erörtert. Hier wird nicht noch einmal darauf eingegangen.

Bei der Vermessung der Front des Flugzeuges 10 durch den Sensor 15 erhält man die Polarkoordinaten aller abgetasteten Punkte. Die Polarkoordinaten können dann z.B. für den Punkt P2 in eine Horizontalkoordinate X_{P2} und eine Vertikalkoordinate Y_{P2} umgerechnet werden. Weiterhin ist ein Höhenbereich 23 festgelegt, der durch die Vertikalkoordinaten Yₒ und Yᵤ begrenzt ist. Für alle Meßpunkte P2 und P3, die innerhalb des durch die Vertikalkoordinaten Yᵤ und Yₒ begrenzten Bereiches fallen, werden die zugehörigen Horizontalkoordinaten X_{P2} und X_{P3} errechnet und gemittelt. Der erhaltene Mittelwert wird als aktuelle Position des Flugzeuges 10 definiert. Der Höhenbereich 23 wird für jeden Flugzeugtyp so ausgewählt, daß er die Laserstrahlen gut reflektiert, also nicht an einer Stelle der Front liegt, die schlecht reflektiert, wie dies z.B. bei dem Cockpitfenster 22 und dem an der Spitze angeordneten Radardom 21 der Fall ist. Diese Auswahl der zu verarbeitenden Meßpunkte liefert verläßliche Ergebnisse. Im Zweifelsfall reicht sogar ein Meßpunkt in dem vorgegebenen Höhenbereich Yᵤ, Yₒ aus, um eine ausreichende Einschätzung der Position des Flugzeuges 10 zu gewährleisten.

Aus dem bekannten Abstand zwischen Flugzeugfront zu der Kabinentür 13 (der für jedes Flugzeug spezifisch ist), läßt sich ein Wert für eine Horizontalkoordinate X_{Pa} für die Parkposition ermitteln und im Sensorrechner speichern. Erreicht der in den aufeinanderfolgenden Meßdurchläufen aus den Horizontalkoordinaten X_{P2} und X_{P3} errechnete Mittelwert den Wert der Horizontalkoordinate X_{Pa}, dann befindet sich das Flugzeug 10 mit seiner Kabinentür in der gewünschten Position 12. Die fortschreitende Annäherung des Flugzeuges 10 an seine Parkpositon kann dem Piloten über ein in der Nähe des Sensors angebrachtes Display 17 auf geeignete Weise vermittelt werden.

Der Sensor kann beliebig ausgebildet sein. In der Regel wird man einen Sensor mit einem Spiegel oder Prismenscanner verwenden. Es ist aber auch z.B. möglich, daß der Sensor eine Reihe von Laserdioden aufweist, die parallele Laserpulse aussenden. Diese Pulse werden von einer Projektionslinse je nach Position der absendenden Laserdiode unterschiedlich gebrochen und sind jeweils einem definierten Winkel zuzuordnen. Steuert man die Laserdioden nacheinander an, so ergibt sich ebenfalls eine Abtastung über einen definierten Winkelbereich. Die Vorteile der Erfindung lassen sich unabhängig von der Auswahl des verwendeten Sensor sin jedem Fall verwirklichen.

## Patentansprüche

1. Vorrichtung zur Führung des Piloten eines sich seiner festgelegten Parkposition in gerader Fahrt nähernden Flugzeuges, mit einer in Fahrtrichtung von vorne auf das Flugzeug schauenden Entfernungsmeßeinrichtung, die die aktuelle Position des Flugzeuges ermittelt, und mit einer Anzeigeeinrichtung, die dem Piloten die verbleibende Distanz zwischen aktueller und Parkposition angibt, wobei als Enfernungsmeßeinrichtung mindestens ein Lasersensor vorgesehen ist, **dadurch gekennzeichnet**, daß der Lasersensor ein 2D Lasersensor (15) ist, der innerhalb eines vorgegebenen Blickwinkels (16) und in aufeinanderfolgenden Meßdurchläufen die Front eines Flugzeuges (10) punktweise in einer nicht horizontalen Ebene vermißt und der jeden Meßpunkt (P1-P4) in seine Horizontal- und Vertikalkoordinate zerlegt und aus den in einem Meßdurchlauf ermittelten Horizontalkoordinaten (X_{P2}, X_{P3}) von solchen Meßpunkten (P2, P3), deren Vertikalkoordinaten (Y_{P2}, Y_{P3}) in mindestens einen für jeden Flugzeugtyp zwischen Grenzwerten (Yᵤ, Yₒ) separat definierbaren Höhenbereich (23) fallen, den Mittelwert als aktuelle Position des Flugzeuges (10) bildet, mit der ebenfalls als Horizontalkoordinate (X_{Pa}) definierten Parkposition vergleicht und in Abhängigkeit von der Distanz zwischen der aktuellen Postion und der Parkposition ein Signal für die Anzeigeeinrichtung (17) erzeugt.

2. Vorrichtung nach Anspruch 1, **dadurch gekennzeichnet**, daß für jeden Flugzeugtyp mehrere Höhenbereiche definiert sind, wobei in jedem Meßdurchlauf die Meßpunkte aus mindestens einem der Höhenbereiche zur Bestimmung der aktuellen Position des Flugzeuges herangezogen werden.

3. Vorrichtung nach den Ansprüchen 1 und 2, **dadurch gekennzeichnet**, daß der 2D-Sensor die Front eines unbekannten, in Parkposition stehenden Flugzeuges in vorgegebenen Höhenbereichen wiederholt vermißt, in Abhängigkeit von der Qualität der Meßsignale mindestens einen Höhenbereich auswählt und den ausgewählten Höhenbereich für diesen Flugzeugtyp speichert und weiterhin den aus den in diesen Höhenbereich fallenden Meßpunkten errechneten Miitelwert als Parkposition speichert.

4. Vorrichtung nach Anspruch 2 oder 3, **dadurch gekennzeichnet**, daß der Sensor ein sich seiner Parkposition näherndes unbekanntes Flugzeug in vorgegebenen Höhenbereichen vermißt und aus den in die einzelnen Höhenbereiche fallenden Meßpunkten Mittelwerte errechnet, und über einen Vergleich dieser errechneten Mittelwerte mit Mittelwerten, die für die für die jeweiligen Flugzeugtypen definierten Höhenbereiche gespeichert wurden, den Typ des sich nähernden Flugzeuges bestimmt.

5. Vorrichtung nach Anspruch 1, **dadurch gekennzeichnet**, daß der 2D-Lasersensor (15) in einer im wesentlichen vertikalen Ebene vermißt.

6. Vorrichtung nach den Ansprüchen 1 oder 2, **dadurch gekennzeichnet**, daß der 2D-Lasersensor (15) oberhalb der Stand-Center-Line bzw. deren gerader Verlängerung fest installiert ist.

7. Vorrichtung nach einem der Ansprüche 1 bis 6, **dadurch gekennzeichnet**, daß mehrere 2D-Lasersensoren vorgesehen sind, deren Meßebenen parallel nebeneinander angeordnet sind.

## Claims

1. Apparatus for guiding the pilot of an aircraft approaching its stipulated parking position in a straight line with a distance measuring device, which views the aircraft from the front in the direction of movement and which determines the actual position of the aircraft, and with an indicating device which informs the pilot of the distance remaining between the actual and parking positions, as distance measuring device being provided at least a laser sensor, characterised in that the laser sensor (15) is a 2D laser sensor which surveys the front of an aircraft (10) point by point in a not horizontal plane within a predetermined viewing angle (16) and in successive measuring sweeps and which resolves each measuring point (P1-P4) into its horizontal and vertical coordinates and from the horizontal coordinates (X_{P2}, X_{P3}), determined in one measuring sweep, of such measuring points (P2, P3), the vertical coordinates (Y_{P2}, Y_{P3}) of which fall into at least one height range (23) which is separately definable for each aircraft type between threshold values (Yᵤ, Yₒ), forms the average value as the actual position of the aircraft (10), compares it with the parking position, which is also defined as a horizontal coordinate (X_{Pa}) and produces a signal for the indicating device (17) in dependence on the distance between the actual position and the parking position.

2. Apparatus as claimed in Claim 1, characterised in that a plurality of heigth ranges are defined for each type of aircraft, whereby in each measuring sweep the measuring points from at least one of the height ranges are used to determine the actual position of the aircraft.

3. Apparatus as claimed in Claims 1 and 2, characterised in that the 2D sensor repeatedly surveys the front of an unknown aircraft standing in the parking position in predetermined height ranges, selects at least one height range in dependence on the quality of the measurement signals and stores the selected height range for this aircraft type and also stores the average value calculated from the measurement points falling in this height range as the parking position.

4. Apparatus as claimed in Claim 2 or 3, characterised in that the sensor surveys an unknown aircraft approaching its parking position in predetermined height ranges and calculates average values from the measuring points falling into the individual height ranges and, by means of a comparison of these calculated average values with average values which were stored for the height ranges defined for the respective aircraft types, determines the type of the approaching aircraft.

5. Apparatus as claimed in Claim 1, characterised in that the 2D laser sensor (15) surveys in a substantially vertical plane.

6. Apparatus as claimed in Claims 1 or 2, characterised in that the 2D laser sensor (15) is fixedly installed above the stand-centre line or the straight extension thereof.

7. Apparatus as claimed in one of Claims 1 to 6, characterised in that a plurality of 2D laser sensors are provided, the measuring planes of which are disposed parallel and adjacent to one another.

## Revendications

1. Dispositif de guidage du pilote d'un avion qui s'approche en ligne droite de sa position de stationnement, comportant un dispositif de télémétrie lequel est constitué par au moins un détecteur laser et est, dans le sens de la marche, orienté vers l'avant de l'avion et en détermine la position actuelle, et comportant un dispositif d'affichage qui indique au pilote la distance restante entre la position actuelle et la position de stationnement, **caractérisé en ce que** le détecteur laser est un détecteur laser 2D (15) qui, dans les limites d'un angle de visée (16) donné et par une suite de balayages consécutifs, relève point par point dans un plan non horizontal la partie frontale d'un avion (10) et décompose chaque point de mesure (P1-P4) en ses coordonnées horizontales et verticales et, à partir des coordonnées horizontales (X_{P2}, X_{P3}) relevées au cours d'un balayage de tels points de mesure (P2, P3) dont les coordonnées verticales (Y_{P2}, Y_{P3}) sont comprises dans au moins un intervalle de hauteur (23) définissable séparément pour chaque type d'avion entre des valeurs limites (Yᵤ, Yₒ), en établit la valeur moyenne en tant que position actuelle de l'avion (10) qu'il compare avec la position de stationnement elle aussi définie sous forme de coordonnées horizontales (X_{Pa}) et, en fonction de la distance entre la position actuelle et la position de stationnement, génère un signal pour le système d'affichage (17).

2. Procédé selon la revendication 1, **caractérisé en ce que** pour chaque type d'avion sont définis plusieurs intervalles de hauteur, la position actuelle de l'avion étant déterminée sur la base des points de mesure relevés dans l'un au moins des intervalles de hauteur lors de chaque balayage de mesure.

3. Procédé selon les revendications 1 et 2, **caractérisé en ce que** le détecteur 2D mesure de façon répétée et dans des intervalles de hauteur prédéfinis la partie frontale d'un avion inconnu se trouvant en position de stationnement et, en fonction de la qualité des signaux de mesure, sélectionne au moins un intervalle de hauteur et mémorise l'intervalle de hauteur sélectionné pour ce type d'avion puis mémorise comme position de stationnement la valeur moyenne calculée à partir des points de mesure situés dans cet intervalle de hauteur.

4. Procédé selon la revendication 2 ou 3, **caractérisé en ce que** le détecteur mesure dans des intervalles de hauteur prédéfinis un avion inconnu s'approchant de sa position de stationnement et, à partir des points de mesure situés dans les différents intervalles de hauteur, calcule des valeurs moyennes et détermine le type de l'avion qui s'approche en comparant ces valeurs moyennes calculées et des valeurs moyennes mémorisées pour les intervalles de hauteur définis pour les différents types d'avion.

5. Procédé selon la revendication 1, **caractérisé en ce que** le détecteur laser 2D (15) effectue le balayage de mesure dans un plan essentiellement vertical.

6. Procédé selon les revendications 1 ou 2, **caractérisé en ce que** le détecteur laser "D (15) est installé de façon fixe au-dessus de la ligne centrale de stationnement ("Stand Center-Line") ou de son prolongement rectiligne.

7. Procédé selon l'une des revendications 1 à 6, **caractérisé en ce qu'**il comporte plusieurs détecteurs laser 2D dont les plans de mesure sont disposés parallèlement l'un à côté de l'autre.
